# EUROPÄISCHE PATENTSCHRIFT

(11) **EP 1 470 975 B1**
(45) Veröffentlichungstag und Bekanntmachung des Hinweises auf die Patenterteilung: **18.07.2007**
(21) Anmeldenummer: 03028200.8
(22) Anmeldetag: 09.12.2003
(51) Int. Cl.: B60S 1/08

(54) **Regensensor, insbesondere für ein Kraftfahrzeug**
Rain sensor, in particular for a motor vehicle
Capteur de pluie, en particulier pour un véhicule automobile

(30) Priorität: 31.03.2003 DE 10314704
(43) Veröffentlichungstag der Anmeldung: 27.10.2004
(73) Patentinhaber: ROBERT BOSCH GMBH, 70442 Stuttgart (DE)
(72) Erfinder: Sautter, Helmut, 71254 Ditzingen (DE); Jerger, Armin, 77815 Buehl (DE); Wolf, Frank, 77815 Buehl (DE); Thominet, Vincent, CH-1110 Morges (CH); Yang, Zishao, 85435 Erding (DE); Hohenbleicher, Gerhard, 82256 Fürstenfeldbruck (DE)

(56) Entgegenhaltungen:
- EP-A- 0 999 104
- EP-A- 1 182 445
- EP-A- 1 195 598
- WO-A-03/004321
- PATENT ABSTRACTS OF JAPAN Bd. 2000, Nr. 10, 17. November 2000 (2000-11-17) -& JP 2000 193589 A (CENTRAL GLASS CO LTD), 14. Juli 2000 (2000-07-14)

## Beschreibung

### Stand der Technik

Die Erfindung betrifft einen Regensensor, insbesondere für ein Kraftfahrzeug, nach Gattung des unabhängigen Anspruchs.

Es sind schon zahlreiche Regensensoren bekannt, welche die auf der Scheibe eines Kraftfahrzeugs befindliche Feuchtigkeit erkennen können, und die Scheibenwischvorrichtung des Kraftfahrzeugs entsprechend zu steuern vermögen. Derartige Regensensoren weisen eine teilweise in der Scheibe angeordnete Messstrecke auf, die aus einem Sender zur Emission von Strahlung und einem Empfänger zur Detektion von Strahlung gebildet ist. Innerhalb dieser Messstrecke ist die Scheibe derart angeordnet, daß auf der Oberfläche der Scheibe befindliche Feuchtigkeit, durch die Änderung des Totalfreflexionswinkels an der Glas-Luft Grenzfläche der Scheibe detektierbar ist. Durch diese Änderung wird die Ausbreitung der Strahlung durch die auf der Oberfläche befindliche Feuchtigkeit beeinflusst, was vom Empfänger detektiert wird.

Insbesondere zeigt die EP 0 999 104 eine Sensoreinrichtung, bei der holographische Elemente vorgesehen sind, welche die Strahlung auf ihrem Strahlungspfad zwischen Sender und Empfänger leiten. Bei den dort gezeigten Strahlungspfaden werden Retroreflektoren benutzt, deren Wirkungsgrad jedoch stark wellenlängenabhängig ist, und deren Wirkung nur in einem sehr engen Winkelbereich von wenigen Grad eintritt. Weiterhin ist bei derartigen Sensoren die sensitive Fläche sehr klein, so dass die Empfindlichkeit einer derartigen Sensoreinrichtung begrenzt ist.

### Vorteile der Erfindung

Der erfindungsgemäße Regensensor mit den Merkmalen des Hauptanspruchs hat den Vorteil, dass durch ein holographisches Element, welches in oder auf der Scheibe angeordnet ist, die Strahlung in Richtung der Oberfläche derart abgelenkt wird, dass der Strahlungspfad bei einer Projektion auf die Oberfläche einen Winkel einschließt, so dass auf Retroreflektoren mit den oben beschriebenen Nachteilen verzichtet werden kann.

Durch die in den Unteransprüchen aufgeführten Maßnahmen ergeben sich vorteilhafte Weiterbildungen und Verbesserungen der im Hauptanspruch angegebenen Merkmale.

Weiterhin ist vorteilhaft, wenn das holographische Element Strahlung in mindestens zwei Richtungen aufteilt, so dass zwei Strahlungspfade entstehen, die bei einer Projektion auf die Oberfläche zwei Winkel einschließen, die vom gleichen Betrage sind. Auf diese Weise können mit einem einzigen holographischen Element zwei oder mehrere sensitive Flächen erzeugt werden, so dass die Empfindlichkeit des Regensensors noch weiter erhöht wird.

Sind die Sendemittel und die Empfängermittel außerhalb des Sichtfelds des Fahrzeugführers angeordnet, so ergibt sich keine störende Beeinträchtigung des Sichtfelds für den Fahrer.

Eine höhere Empfindlichkeit des Regensensors wird dadurch erzielt, dass die sensitive Fläche vergrößert wird. Dies wird dadurch erreicht, daß die Strahlung in einem Band verläuft und der Ablenkungsbereich des holographischen Elementes einem Streifen entspricht, dessen Längserstreckung mit der Richtung des Strahlungspfades einen Winkel von etwa 45 °C einschließt. Vorteilhafterweise kann die sensitive Fläche des Regensensors an beliebiger Stelle der Scheibe angeordnet sein, wenn mindestens ein Strahlungsleiter auf oder in der Scheibe angeordnet ist.

In einer weiteren vorteilhaften Ausgestaltung der Erfindung weist der Strahlungspfad vier Abschnitte auf, und zwar einen ersten Abschnitt, der im wesentlichen parallel zur Oberfläche verläuft und innen oder auf der Scheibe angeordnet ist, einen zweiten Abschnitt, der sich an den ersten Abschnitt anschließt und in dem die Strahlung in Richtung der Oberfläche geleitet ist, ein dritter Abschnitt der sich an den zweiten Abschnitt anschließt, vorgesehen ist, indem die Strahlung von der Oberfläche in die Scheibe geleitet ist und wobei in vierter Abschnitt vorgesehen ist, indem die von der Oberfläche zumindest teilweise reflektierte Strahlung etwa parallel zur Oberfläche geleitet ist.

Hierbei ist es besonders vorteilhaft wenn das Sendemittel die Strahlung in den ersten Abschnitt abgibt und das Empfängermittel die Strahlung aus dem vierten Abschnitt empfängt.

Besonders günstige optische Verhältnisse sind dann gegeben, wenn der Abstand auf der Oberfläche der Scheibe zwischen dem ersten Abschnitt und dem vierten Abschnitt etwa der doppelten Dicke der Scheibe entspricht.

Eine besonders große sensitive Fläche und damit eine erhöhte Empfindlichkeit des Regensensor kann hierbei erzielt werden, wenn weitere Abschnitte vorgesehen sind, die symmetrisch zum ersten und/oder zum vierten Abschnitt angeordnet sind, so dass sich mehrere Messstrecken ergeben.

### Zeichnungen

Ausführungsbeispiele der Erfindung sind in den Zeichnungen dargestellt und in der nachfolgenden Beschreibung näher erläutert. Es zeigen:
Figur 1, eine schematische Darstellung eines erfindungsgemäßen Regensensors,
Figur 2, eine schematische Draufsicht auf die optischen Komponenten eines erfindungsgemäßen Regensensors,
Figur 3, einen Strahlungsverlauf mit sensitiver Fläche eines erfindungsgemäßen Regensensors aus Figur 1,
Figur 4, eine Variation eines erfindungsgemäßen Regensensors nach Figur 1 und
Figur 5, eine weitere Variation eines erfindungsgemäßen Regensensors in einer schematischen Draufsicht nach Figur 2.

### Beschreibung der Ausführungsbeispiele

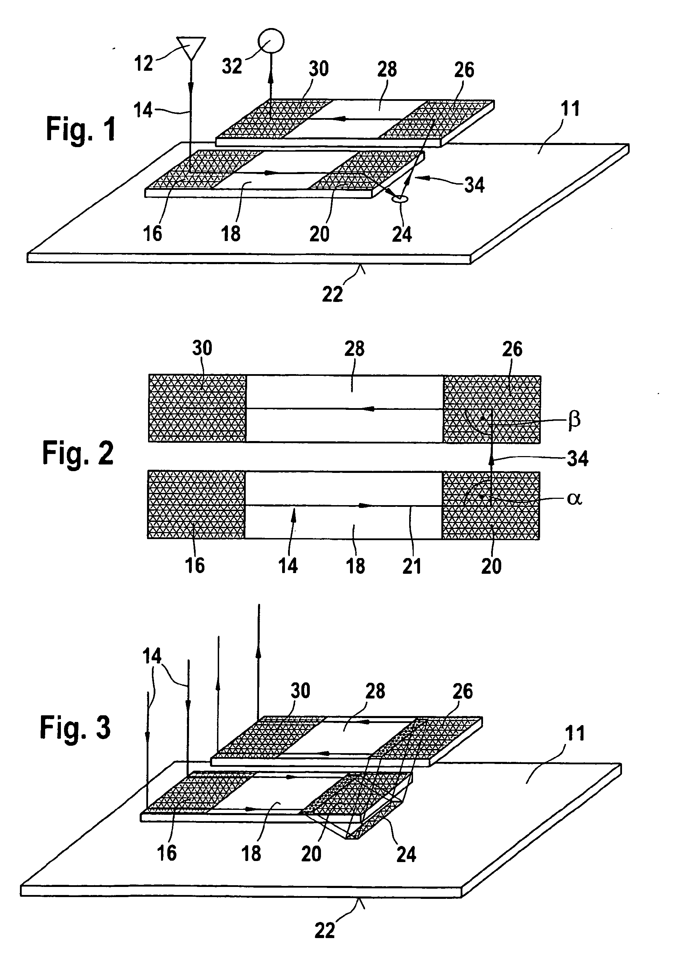

In Figur 1 ist ein erfindungsgemäßer Regensensor 10 in einer schematischen Prinzipskizze gezeigt. Eine Infrarot LED als Sendemittel 12 sendet Strahlung 14 in Richtung eines holographischen Einkoppelelementes 16. Das Einkoppelelement 16 ist als Folie ausgebildet, in die ein Hologramm aufgeprägt ist. Das Hologramm ist derart ausgebildet, dass die Strahlung einen Strahlungsleiter 18 eingekoppelt wird, der die Strahlung zum holographischen Element 20 führt. Das holographische Einkoppelelement 16 der Strahlungsleiter 18 und das holographische Element 20 sind hierbei einstückig aus einer Folie ausgebildet, welche auf die Innenfläche der Scheibe 11 aufgebracht ist.

Das holographische Element 20 ist weiterhin derart ausgebildet, dass die Strahlung einerseits in Richtung der äußeren Oberfläche 22 der Scheibe 11 geleitet wird und andererseits noch in eine weitere Richtung und zwar senkrecht zur Einfallsrichtung, aus der die Strahlung durch den Strahlungsleiter 18 in das holographische Element 20 eingefallen ist, ablenkt. Auf diese Weise entsteht ein Strahlungspfad 21, der in einer zur Scheibe 11 parallelen Ebene einen Winkel Alpha einschließt. Darüber hinaus wird die Strahlung noch aus dieser parallelen Ebene heraus, in Richtung der Oberfläche 22 abgelenkt.

An der Oberfläche 22 wird die Strahlung bei trockener Scheibe 11 sensitiven Bereich 24 totalreflektiert und dadurch zu einem weiteren holographischen Element 26 gelenkt. Dieses ist wiederum derart ausgebildet, dass die Strahlung durch einen weiteren Strahlungsleiter 28, der sich direkt an das weitere holographische Element 26 anschließt, zu einem Auskoppelelement 30 geleitet wird. Dieses ist ebenfalls holographisch ausgebildet und lenkt die aus dem weiteren Strahlungsleiter 28 kommende Strahlung in Richtung auf ein Empfängermittel 32. Der Weg, den die Strahlung vom holographischen Element 20 zum weiteren holographischen Element 26 zurücklegt, bildet hierbei die Messstrecke 34 innerhalb der der sensitive Bereich 24 liegt.

In Figur 2 ist der Strahlungspfad 14 in einer Draufsicht dargestellt. Die Strahlung verläuft vom Einkoppelelement 16 über den Strahlungsleiter 18 zum holographischen Element 20.

Dieses lenkt die Strahlung in einer zur Innenfläche der Scheibe 11 parallelen Ebene um etwa 90 Grad ab und lenkt die Strahlung gleichzeitig aus dieser Ebene heraus in Richtung der Oberfläche 22. Hierdurch ist die Messstrecke 34 gebildet. Das weitere holographische Element 26 wiederum lenkt die Strahlung aus der Messstrecke 34 in der Projektion auf einer zur Oberfläche 22 parallelen Ebene, um 90 Grad ab, hinein in einen weiteren Strahlungsleiter 28, der die Strahlung zum Auskoppelelement 30 führt. So entsteht eine zum Element 20 beziehungsweise zur Einkoppelseite symmetrische Anordnung.

Befindet sich Feuchtigkeit im sensitiven Bereich 24 auf der Oberfläche 22 der Scheibe 11, so findet keine Totalreflektion im sensitiven Bereich 24 statt, sondern es wird vielmehr ein Teil der Strahlung aus der Scheibe ausgekoppelt und nur ein Rest in Richtung auf das weitere holographische Element 26 reflektiert. Dieser Rest wird dann durch den weiteren Strahlungsleiter 28 und das Auskoppelelement 30 auf den Empfänger 32 (Figur 1) geleitet und dadurch auf die Feuchtigkeit auf der Oberfläche 22 der Scheibe 11 geschlossen.

In Figur 3 sind die realen Strahlungsverhältnisse auf einem Regensensor 10 schematisch dargestellt. Die Strahlung 14 tritt aus dem Sendermittel 12 (Figur 1) in einem größeren Bereich aus und wird von dort über das Einkoppelelement 16 den Strahlungsleiter 18 zum holographischen Element 20 geleitet. Da die Strahlungsleiter 18 und das holographische Element 20 im Normalfall nur etwa 0,2 mm dick, und damit sehr dünn sind, entstehen im Bereich des holographischen Elementes 20, welches die Funktion eines Winkelkonverters wahrnimmt, Mehrfachreflektionen. Dies führt dazu, dass der größte Teil des Lichtes in einem sehr schmalen Bereich von etwa 2 mm ausgekoppelt wird, wodurch eine Vergrößerung des holographischen Elements 20 im wesentlichen ohne Wirkung bleibt. Analog wie in Figur 1 gezeigt, wird das Licht vom holographischen Element 20 in Richtung der Scheibe und zusätzlich derart abgelenkt, dass es bei der Reflektion an der Oberfläche 22 der Scheibe 11 auf das weitere holographische Element 26 trifft. Von dort wird dieses Strahlungsband über den weiteren Strahlungsleiter 28 zum Auskoppelelement 30 und zum Empfängermittel 32 (Figur 1) geleitet. Um die sensitive Fläche 24 zu vergrößern, kann der Streifen 36, indem das holographische Element 20 wirkt, schräg angeordnet werden. Auf diese Weise wird der sensitive Bereich 24 wesentlich vergrößert. Hier ist der Streifen 36 etwa 45 Grad zur Hauptstrahlungsrichtung im Strahlungsleiter 18 angeordnet. Das gleiche gilt dann natürlich auch für das weitere holographische Element 26, welches die an der Oberfläche 22 der Scheibe 11 reflektierte Strahlung in den weiteren Strahlungsleiter 28 einkoppelt.

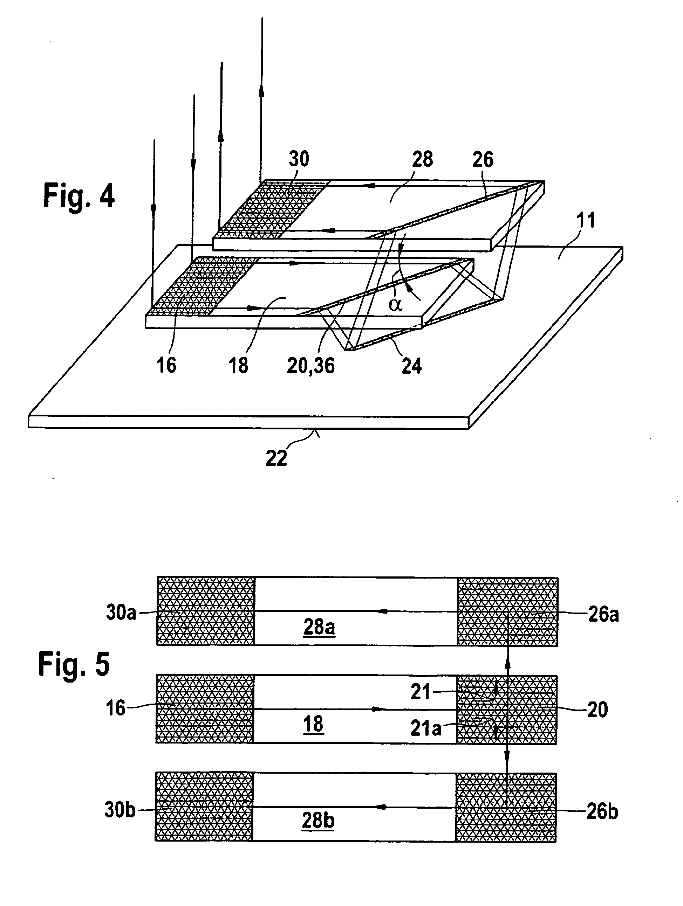

In Figur 5 ist eine Variation eines erfindungsgemäßen Regensensors in einer Darstellung wie in Figur 2 gezeigt. Die Strahlung wird vom Einkoppelelement 16 in den Strahlungsleiter 18 eingekoppelt. Dieser führt die Strahlung zum holographischen Element 20, welches derart ausgebildet ist, dass die Strahlung in zwei entgegengesetzte Strahlen aufgeteilt wird. Ausgehend von der Hauptstrahlungsrichtung, die die Strahlung im Strahlungsleiter 18 aufweist, wird durch das holographische Element 20, die Strahlung in Richtung der Scheibe und um 90 Grad zur Hauptstrahlungsrichtung - wie in Figur 2 - abgelenkt. Die andere Hälfte der Strahlung wird in die Richtung von -90 Grad - also entgegengesetzt- abgelenkt, so dass sich zwei nebeneinanderliegende sensitive Flächen ergeben. Hierzu werden dann zwei weitere holographische Elemente 26a und 26b benötigt, an die sich jeweils auch zwei weitere Strahlungsleiter 28a, 28b, die die Strahlung zum Auskoppelelement 30a und 30b führen. Natürlich sind auch beliebig mehrere derartige Erweiterungen der Messstrecke möglich. Natürlich kann auch bei der in Figur 5 gezeigten Variante das holographische Element 20 bzw. 26a, 26b, schräg zur Strahlungsrichtung angeordnet sein, wie dies in Figur 4 gezeigt ist. Auf diese Weise ist auch bei einer Anordnung gemäss Figur 5 eine Vergrößerung des sensitiven Bereiches 24 möglich.

Die Bedingung der Totalreflektion an Luft, begrenzt die Einfallsrichtung der Strahlung auf etwa 42 Grad bis 63 Grad. Einerseits soll eine Rückreflektion des Lichts in das holographische Element 20 vermieden werden, und andererseits soll das Licht möglichst verlustfrei vom weiteren holographischen Element 26 aufgefangen werden. Daher muss der Abstand der beiden Strahlungsleiter 18 und 28 bzw. der holographischen Elemente 20 und 26 so gewählt werden, dass dieser etwa gleich der doppelten Glasdicke, also etwa 5 mm ist, wenn eine mittlere Einfallsrichtung von etwa 45 Grad bis 50 Grad angenommen wird.

## Patentansprüche

1. Regensensor (10), insbesondere für ein Kraftfahrzeug, mit einer Messstrecke (34), die zumindest aus einem Sendemittel (12) zur Emission von Strahlung und einem Empfängermittel (32) zur Detektion von Strahlung gebildet ist, wobei innerhalb der Messstrecke (34) eine Scheibe (11) mit mindestens einer Oberfläche (22) derart angeordnet ist, dass die Ausbreitung der Strahlung durch auf der Oberfläche (22) befindliche Feuchtigkeit beeinflusst ist, wobei zumindest ein einziges holographisches Element (20) zur Führung der Strahlung vorgesehen ist, das auf und/oder in der Scheibe (11) angeordnet ist, und die Strahlung (14) in Richtung der Oberfläche (22) derart ablenkt, dass ein Strahlungspfad (21) entsteht, der bei einer Projektion auf die Oberfläche (22) einen Winkel (Alpha) einschließt, **dadurch gekennzeichnet, dass** der Winkel (Alpha) des Strahlungspfads (21) 90 Grad beträgt.

2. Regensensor (10) nach einem der vorhergehenden Ansprüche, **dadurch gekennzeichnet, dass** das holographische Element (20) die Strahlung in mindestens zwei Richtungen aufteilt, sodass zwei Strahlungspfade (21, 21 a) entstehen, die bei einer Projektion auf die Oberfläche (22) zwei Winkel (Alpha, Beta) einschließen, die insbesondere von gleichem Betrage sind.

3. Regensensor (10) nach einem der vorhergehenden Ansprüche, **dadurch gekennzeichnet, dass** die Scheibe (11) die Windschutzscheibe einer Kraftfahrzeugs ist und die Sendemittel (12) und die Empfängermittel (32) außerhalb des Sichtfelds des Fahrzeugführers angeordnet sind.

4. Regensensor (10) nach einem der vorhergehenden Ansprüche, **dadurch gekennzeichnet, dass** die Strahlung in einem Band mit der Breite b verläuft und der Ablenkungsbereich des holographischen Elements (20) im Wesentlichen einem Streifen (36) entspricht, dessen Längserstreckung mit der Richtung des Strahlungspfads (21) einen Winkel von insbesondere 45 Grad einschließt.

5. Regensensor (10) nach einem der vorhergehenden Ansprüche, **dadurch gekennzeichnet, dass** mindestens ein Strahlungsleiter (18) auf oder in der Scheibe (11) angeordnet ist.

6. Regensensor (10) nach einem der vorhergehenden Ansprüche, **dadurch gekennzeichnet, dass** der Strahlungspfad (21) einen ersten Abschnitt aufweist, der im Wesentlichen parallel zur Oberfläche verläuft und in oder auf der Scheibe (11) angeordnet ist,
dass der Strahlungspfad einen zweiten Abschnitt aufweist, der sich an den ersten Abschnitt anschließt, in dem die Strahlung in Richtung der Oberfläche (22) geleitet ist, und
dass ein dritter, sich an den zweiten Abschnitt anschließender Abschnitt vorgesehen ist, in dem die Strahlung von der Oberfläche (22) in die Scheibe (11) geleitet ist, und
dass ein vierter Abschnitt vorgesehen ist, in dem die von der Oberfläche (22) zumindest teilweise reflektierte Strahlung im Wesentlichen parallel zur Oberfläche (22) geleitet ist.

7. Regensensor (10) nach Anspruch 6, **dadurch gekennzeichnet, dass** das Sendemittel (12) Strahlung in den ersten Abschnitt abgibt und das Empfängermittel (32) Strahlung aus dem vierten Abschnitt empfängt.

8. Regensensor (10) nach Anspruch 6 oder 7, **dadurch gekennzeichnet, dass** der ebene Abstand (a) zwischen dem ersten Abschnitt und dem vierten Abschnitt etwa der doppelten Dicke der Scheibe (11) entspricht.

9. Regensensor (10) nach einem der Ansprüche 6 bis 8, **dadurch gekennzeichnet, dass** weitere Abschnitte vorgesehen sind, die symmetrisch zum ersten Abschnitt und/oder zum vierten Abschnitt angeordnet sind.

## Claims

1. Rain sensor (10), in particular for a motor vehicle, having a measurement section (34) which is formed at least from a transmission means (12) for emitting radiation and a receiver means (32) for detecting radiation, with a glass pane (11) with at least one surface (22) being arranged within the measurement section (34) in such a way that the propagation of the radiation is influenced by moisture present on the surface (22), with at least one single holographic element (20) which is arranged on and/or in the glass pane (11) being provided for conducting the radiation, and the radiation (14) being deflected in the direction of the surface (22) in such a way that a radiation path (21) is produced which forms an angle (alpha) in the event of projection onto the surface (22), **characterized in that** the angle (alpha) of the radiation path (21) is 90 degrees.

2. Rain sensor (10) according to the preceding claim, **characterized in that** the holographic element (20) divides the radiation in at least two directions, with the result that two radiation paths (21, 21a) are produced which form two angles (alpha, beta), which are particularly of equal magnitude, in the event of projection onto the surface (22).

3. Rain sensor (10) according to either of the preceding claims, **characterized in that** the glass pane (11) is the windscreen of a motor vehicle, and the transmission means (12) and the receiver means (32) are arranged outside the field of view of the vehicle driver.

4. Rain sensor (10) according to one of the preceding claims, **characterized in that** the radiation runs in a band with the width b, and the deflection region of the holographic element (20) substantially corresponds to a strip (36) whose longitudinal extent forms an angle of, in particular, 45 degrees with the direction of the radiation path (21).

5. Rain sensor (10) according to one of the preceding claims, **characterized in that** at least one radiation conductor (18) is arranged in or on the glass pane (11).

6. Rain sensor according to one of the preceding claims, **characterized in that** the radiation path (21) has a first section which runs substantially parallel to the surface and is arranged in or on the glass pane (11),
**in that** the radiation path has a second section which adjoins the first section and in which the radiation is conducted in the direction of the surface (22), and
**in that** a third section is provided, which adjoins the second section and in which the radiation is conducted from the surface (22) into the glass pane (11), and
**in that** a fourth section is provided, in which the radiation which is at least partially reflected by the surface (22) is conducted substantially parallel to the surface (22).

7. Rain sensor (10) according to Claim 6, **characterized in that** the transmission means (12) transmits radiation to the first section, and the receiver means (32) receives radiation from the fourth section.

8. Rain sensor (10) according to Claim 6 or 7, **characterized in that** the planar distance (a) between the first section and the fourth section corresponds to approximately twice the thickness of the glass pane (11).

9. Rain sensor (10) according to one of Claims 6 to 8, **characterized in that** further sections are provided, which are arranged symmetrically in relation to the first section and/or in relation to the fourth section.

## Revendications

1. Capteur de pluie (10), notamment pour un véhicule automobile, comportant un chemin de mesure (34) formé par au moins un moyen émetteur (12) émettant un faisceau et un moyen de réception (32) détectant le faisceau,
une vitre (11) munie d'au moins une surface (22) étant prévue dans le chemin de mesure (34),
le développement du faisceau étant influencé par l'humidité occupant la surface (22),
au moins un élément holographique unique (20) guidant le faisceau, cet élément étant installé sur et/ou dans la vitre (11) et
le faisceau (14) étant dévié en direction de la surface (22) pour former un chemin de faisceau (21) qui correspond par projection sur la surface (22) à un angle (alpha),
**caractérisé en ce que**
l'angle (alpha) du chemin du faisceau (21) est égal à 90°.

2. Capteur de pluie (10) selon la revendication 1,
**caractérisé en ce que**
l'élément holographique (20) divise le faisceau dans au moins deux directions pour former deux chemins de faisceau (21, 21a) qui, pour une projection sur la surface (22), forment deux angles (alpha, béta) notamment de même amplitude.

3. Capteur de pluie (10) selon l'une des revendications précédentes,
**caractérisé en ce que**
la vitre (11) est le pare-brise d'un véhicule et les moyens d'émission (12) et les moyens de réception (32) sont installés au-delà du champ de vue du conducteur du véhicule.

4. Capteur de pluie (10) selon l'une des revendications précédentes,
**caractérisé en ce que**
le faisceau passe dans une bande de largeur (b) et la plage de déviation de l'élément holographique (20) correspond pour l'essentiel à une bande (36) dont la longueur forme avec la direction du chemin de faisceau (21), un angle, notamment égal à 45°.

5. Capteur de pluie (10) selon l'une des revendications précédentes,
**caractérisé par**
au moins un guide de faisceau (18) sur ou dans la vitre (11).

6. Capteur de pluie (10) selon l'une des revendications précédentes,
**caractérisé en ce que**
le chemin de faisceau (21) comporte un premier segment, pour l'essentiel, parallèle à la surface et installé dans ou sur la vitre (11),
le chemin du faisceau comporte un second segment qui fait suite au premier segment dans lequel le faisceau est dirigé vers la surface (22) et un troisième segment faisant suite au second segment et dans lequel le faisceau est dirigé de la surface (22) dans la vitre (11) et
un quatrième segment dans lequel le faisceau réfléchi au moins en partie par la surface (22) est dirigé pour l'essentiel parallèlement à la surface (22).

7. Capteur de pluie (10) selon la revendication 6,
**caractérisé en ce que**
le moyen émetteur (12) émet un faisceau dans le premier segment et le moyen récepteur (32) reçoit le faisceau du quatrième segment.

8. Capteur de pluie (10) selon la revendication 6 ou 7,
**caractérisé en ce que**
la distance plane (a) entre le premier segment et le quatrième segment correspond sensiblement au double de l'épaisseur de la vitre (11).

9. Capteur de pluie (10) selon l'une des revendications 6 à 8,
**caractérisé par**
d'autres segments symétriques par rapport au premier segment et/ou au quatrième segment.
